Europäisches Patentamt

European Patent Office

Office européen des brevets

(19)

(11) **EP 1 110 740 A1**

(12) **EUROPEAN PATENT APPLICATION**
published in accordance with Art. 158(3) EPC

(43) Date of publication:
**27.06.2001 Bulletin 2001/26**

(51) Int Cl.⁷: **B41J 3/407**, B41J 2/32,
B41J 2/36, B41J 2/345

(21) Application number: **99940459.3**

(22) Date of filing: **25.08.1999**

(86) International application number:
**PCT/JP99/04567**

(87) International publication number:
**WO 00/13908 (16.03.2000 Gazette 2000/11)**

(84) Designated Contracting States:
**AT BE CH CY DE DK ES FI FR GB GR IE IT LI LU MC NL PT SE**

(30) Priority: **02.09.1998 JP 24874298**
**27.10.1998 JP 30590998**
**28.10.1998 JP 30747598**

(71) Applicant: **STAR MICRONICS CO., LTD.**
**Shizuoka-shi, Shizuoka-ken 422-8654 (JP)**

(72) Inventors:
• **NAGAI, Kenichi, Star Micronics Co., Ltd.**
**Shizuoka-shi, Sizuoka 422-8654 (JP)**

• **TSUKUDA, Yasunori, Star Micronics Co., Ltd.**
**Shizuoka-shi, Sizuoka 422-8654 (JP)**
• **SAWAMOTO, Norihiro, Star Micronics Co., Ltd.**
**Shizuoka-shi, Sizuoka 422-8654 (JP)**
• **MITSUMORI, Yoshio, Star Micronics Co., Ltd.**
**Shizuoka-shi, Sizuoka 422-8654 (JP)**

(74) Representative: **Kinsler, Maureen Catherine et al**
**Kilburn & Strode,**
**20 Red Lion Street**
**London WC1R 4PJ (GB)**

(54) **METHOD AND APPARATUS FOR PRINTING ON ENDLESS MEDIUM, METHOD AND APPARATUS FOR ROTARY PRINTING, AND ROTARY PRINTING HEAD**

(57) A rotary printing apparatus 10 comprises a thermal head 11 for printing in a main scanning direction along the transverse direction of an endless medium such as a disk print medium M, and a stepping motor 15 for conveying the disk print medium M in a sub scanning direction along the circumferential direction of the disk print medium M, and forms an image composed of a plurality of pixels arranged in the transverse and circumferential directions of the disk print medium M based on image data supplied from an external host. An overlap-printing area Ra extending a predetermined length from a printing start position PS of the thermal head 11 and an overlap-printing area Rb extending backward a predetermined length from a printing end position PE are printed so as to overlap with each other. This structure makes the seam of the print image inconspicuous to the naked eye, so that high-quality images can be obtained.

FIG. 6

OVERLAP-PRINTING AREA RD

EP 1 110 740 A1

**EP 1 110 740 A1**

**Description**

Technical Field

The present invention relates to an endless medium printing apparatus and method for forming an image on an endless medium such as a disk-shaped medium, conical medium or cylindrical medium. Moreover, the invention relates to a rotary printing apparatus and method for printing on a disk print medium such as a CD-R (compact disk-recordable), and a rotary printing thermal head.

Background Art

CD-Rs (compact disk-recordables) are write-once optical disks onto which data can be recorded only once unlike disks such as read-only CDs and CD-ROMs (read only memories). Data recorded on CD-Rs can be reproduced by a reproducing apparatus for CD-Rs as well as CDs and CD-ROMs. Because of their inexpensiveness, easiness to handle and large recording capacity, CD-Rs are frequently used for software publication on a small scale of approximately 100 copies.

One surface of a CD or CD-ROM is used as a record surface for data-recording and data-reading, and the other surface is generally used as a print surface for printing a title or the like. Since CDs or CD-ROMs having the same design are generally published in large quantity, printing is performed by use of a large-size printer. Since CD-Rs are used for small-scale publication and private uses, a small-size and inexpensive printer is desired which is capable of easily producing and changing print contents for a small number of disks or for each disk.

Examples of such printers are described in Japanese Unexamined Patent Publications JP-A 5-238005 (1993) and JP-A 6-31906 (1994). In these information recorders, information is recorded onto a record surface of an optical disk through a pickup, while ink-jet printing is performed on the print surface. The printing the optical disk is performed while moving an ink-jet nozzle in the radial direction of the optical disk and rotating the optical disk.

Such information recorders are large-sized and complicated because the information recorders have an ink cartridge and a mechanism for supplying ink to an ink-jet head for an ink-jet printing method and as well a pickup for information recording. Moreover, since the ink-jet head and the pickup are provided in the same apparatus, information recording may be hindered for a reason such that ink scattering from the ink-jet head adheres to the pickup. Further, maintenance such as replacement of the ink cartridge and cleaning of parts around the ink-jet head takes time.

Moreover, since the front end and rear end of an image printed on the print surface of the optical disk are interlinked with each other, a conspicuous position shift or density difference occurs at a seam between the print start position and end position of the image. Such a position shift or density difference at the seam is so conspicuous particularly in a print having a figured background, although not so conspicuous in a print of continuous solid image.

Moreover, since the circumferential velocity of an optical disk increases from inner toward outer of the optical disk, the print dot pitch in the circumferential direction is longer at an more outer side of the optical disk, so that the print density looks higher at a more inner side of the optical disk and looks lower at a more outer side thereof. This significantly degrades the image quality.

Moreover, the pixel pitch in the circumferential direction of an optical disk is smaller at a more inner track and is longer at a more outer track. Accordingly, when an image pixel of the same shape is recorded along the radial direction, there is a tendency that inner pixels overlap each other and outer pixels are separated from each other. Consequently, the images look blurred at an inner side and high density cannot be obtained at an outer side, so that the image quality is significantly degraded.

Disclosure of Invention

An object of the invention is to provide an endless medium printing apparatus and method which enable printing of a high-quality image on an endless medium of an optical disk or the like.

Moreover, an object of the invention is to provide a rotary printing apparatus and method and a rotary printing thermal head which realize high-quality images by correcting density variations due to differences in circumferential velocity among tracks of a disk print medium.

Moreover, an object of the invention is to provide a rotary printing thermal head and rotary printing apparatus which realize high-quality images by avoiding overlaps and gaps between pixels.

The invention provides an endless medium printing apparatus comprising:

printing means for printing in a main scanning direction along a transverse direction of an endless medium; and medium conveying means for conveying the endless medium in a sub scanning direction along a longitudinal direction thereof,

the apparatus forming an image composed of a plurality of pixels arranged in the transverse and longitudinal directions based on image data supplied from an external host,

wherein a printing start area extending a predetermined length from a printing start position of the printing means and a printing end area extending backward a predetermined length from a printing end position of the printing means overlap with each other to make an overlap-printing area.

According to the invention, since image position shifts, density variations or the like at the printing start and printing end positions are spatially leveled by overlapping the printing start and printing end areas, seams of the print image are made visually inconspicuous, so that much higher quality of image can be obtained as compared with conventional apparatuses. The length of the overlap-printing area is at least equal to or grater than the length corresponding to one pixel in the sub scanning direction and can be arbitrarily set in view of the degree of variation and the printing speed, for example, it is preferable that approximately 3 to 100 pixels are overlap-printed. The endless medium may be a disk-shaped medium such as an optical disk, a conical medium or a cylindrical medium such as an electrophotographic photoconductor drum.

Moreover, in the invention, it is preferable that sub scanning lines in the printing start area and sub scanning lines in the printing end area are disposed so as to alternate every predetermined number of lines in the overlap-printing area.

According to the invention, by disposing the sub scanning lines in the printing start area and the sub scanning lines in the printing end area so as to alternate every predetermined number of lines (for example, every one line or every two lines), the density variations between the overlap-printing area and the non-overlap-printing area can be suppressed. This enables seam processing so smooth that the overlap-printing area and the non-overlap-printing area cannot be distinguished by the naked eye. Moreover, since data processing can be carried out in units of sub-scanning line, speedup in data transfer and calculation is achieved.

Moreover, in the invention it is preferable that the pixels in the printing start area and the pixels in the printing end area are two-dimensionally disposed so as to alternate every predetermined number of pixels in the overlap-printing area.

According to the invention, by two-dimensionally disposing the pixels in the printing start area and the pixels in the printing end area so as to alternate every predetermined number of pixels (forexample, every one pixel or every two pixels), the density variations between the overlap-printing area and the non-overlap-printing area can be suppressed. This enables seam processing so smooth that the overlap-printing area and the non-overlap-printing area cannot be distinguished by the naked eye. Moreover, since errors between the areas are dispersed in a two-dimensional direction, the seam becomes more inconspicuous.

Moreover, in the invention it is preferable that printing is carried out with a weight being assigned to each pixel density so that from the printing start position toward the printing end position in the overlap-printing area, pixel density monotonously increases in the printing start area and monotonously decreases in the printing end area.

According to the invention, by assigning a weight to each pixel density so that from the printing start position toward the printing end position the pixel density monotonously increases in the printing start area and monotonously decreases in the printing end area, the density variations between the overlap-printing area and the non-overlap-printing area can be suppressed. This enables seam processing so smooth that the overlap-printing area and the non-overlap-printing area cannot be distinguished by the naked eye. Moreover, since errors between the areas are dispersed in spatial two-dimensional and density directions, that is, a three-dimensional direction in total, the seam becomes more inconspicuous.

Moreover, in the invention it is preferable that the apparatus comprises a buffer memory for continuously developing image data of the printing start area, image data of the non-overlap-printing area and image data of the printing end area.

According to the invention, by providing a buffer memory having a capacity enough to continuously develop the image data of the printing start area, non-overlap-printing area and printing end area, all the data necessary for printing can be smoothly developed, so that speedup in printing is achieved.

Moreover, the invention provides an endless medium printing method comprising the steps of:

printing on the endless medium in a main scanning direction along a transverse direction of the endless medium, based on image data supplied from an external host while conveying the endless medium in a sub scanning direction along a longitudinal direction thereof, to form an image composed of a plurality of pixels arranged in the transverse and longitudinal directions,

wherein a printing start area extending a predetermined length from a printing start position and a printing end area extending backward a predetermined length from a printing end position are printed so as to overlap with each other.

According to the invention, since image position shifts, density variations and the like at the printing start position and the printing end position are spatially leveled by overlapping the printing start area and the printing end area, the seam of the print image are made visually inconspicuous, so that much higher quality of image can be obtained as compared with the conventional methods. The length of the overlap-printing area is at least equal to or larger than the length corresponding to one pixel in the sub scanning direction and can be arbitrarily set in view of the degree of variation and the printing speed, for example, it is preferable that approximately 3 to 100 pixels are overlap-printed. The endless medium may be a disk-shaped medium such as an optical disk, a conical medium or a cylindrical medium such as an electrophotographic photoconductor drum.

Moreover, the invention provides a rotary printing apparatus comprising:

a print head for printing in a main scanning direction along a radial direction of a disk print medium; and
medium rotating means for rotating the disk print medium in a sub scanning direction along a circumferential direction thereof,
the apparatus forming an image composed of a plurality of pixels arranged in the radial and circumferential directions based on image data supplied from an external host, and comprising:
energizing time controlling means for controlling an energizing time per pixel of the print head so as to be longer for an outer pixel than for an inner pixel.

According to the invention, by controlling the energizing time per pixel so as to be longer for an outer pixel than for an inner pixel, the applied energy per unit length in the circumferential direction of the disk print medium becomes the same at all the tracks, so that the print density also becomes the same at all the tracks of the diskprint medium. Consequently, the density variations due to the circumferential velocity differences among tracks can be eliminated, so that high-quality images can be obtained.

Moreover, in the invention, it is preferable that the energizing time per pixel is controlled by increasing and decreasing number of repetitions of a pulse signal having a predetermined duty ratio.

According to the invention, since the energizing time per pixel Tp is represented by a relational expression:

$$Tp = D \times N$$

wherein D is duty ratio and N is number of repetitions of a pulse signal, which number can be precisely counted by use of a counter or the like, the energizing time Tp can be precisely controlled by managing the number of repetitions N.

Moreover, in the invention it is preferable that the energizing time per pixel is substantially proportional to the radius from a center of the medium to the pixel.

According to the invention, since the circumferential velocity vθ of the disk print medium is represented by a relational expression:

$$v\theta = R \times \omega$$

wherein R is radius from the center of the medium and ω is rotational angular velocity, and the circumferential velocity vθ is proportional to the radius R, variation factors due to the radius R can be canceled by controlling the energizing time Tp to be proportional to the radius R. Consequently, the density variations due to the circumferential velocity differences among tracks can be precisely corrected.

Moreover, the invention provides a rotary printing method comprising the steps of:

printing on a disk print medium in a main scanning direction along a radial direction of the disk print medium, based on image data supplied from an external host while conveying the disk print medium in a sub scanning direction along a circumferential direction thereof to form an image composed of a plurality of pixels arranged in the radial and circumferential directions,
wherein a energizing time per pixel of a print head is controlled so as to be longer for an outer pixel than for an inner pixel.

According to the invention, by controlling energizing time per each pixel so as to be longer for an outer pixel than for an inner pixel, the applied energy per unit length in the circumferential direction of the disk print medium becomes the same at all the tracks, so that the print density also becomes the same at all the tracks of the diskprint medium. Consequently, density variations due to circumferential velocity differences among tracks can be eliminated, so that high-quality images can be obtained.

Moreover, the invention provides a rotary printing method comprising the steps of:

printing on a disk print medium in a main scanning direction along a radial direction of the disk print medium, based on image data supplied from an external host while conveying the disk print medium in a sub scanning direction along a circumferential direction thereof to form an image composed of a plurality of pixels arranged in the radial and circumferential directions,
wherein a drive voltage of a print head is controlled so as to be higher for an outer pixel than for an inner pixel.

According to the invention, by controlling the drive voltage of the print head so as to be higher for an outer pixel than for an inner pixel, applied energies per unit length are the same at respective tracks in the circumferential direction of the disk print medium like the energizing time control, so that the respective tracks have the same print density. Consequently, density variations due to circumferential velocity differences among the tracks can be avoided to obtain high-quality images.

Moreover, by controlling the energizing time and the drive voltage at the same time, various density corrections can be made.

Moreover, the invention provides a rotary printing thermal head for printing in a main scanning direction along a radial direction of a disk print medium, comprising:

a plurality of heating elements arranged in a line;
wherein an inner heating element has a smaller dimension in the sub scanning direction than that of an outer heating element.

According to the invention, since an inner heating element has a smaller dimension in the sub scanning direction than that of an outer heating element, overlaps of inner print pixels and gaps between outer print pixels can be avoided.

Here, it is preferable that a relationship $Ln=L1\times rn/r1$ is satisfied, wherein with respect to the outermost heating element which prints the outermost track of the disk print medium, $r1$ is a distance from the center of rotation of the medium to the center of the outermost heating element, $L1$ is the sub scanning direction dimension of the outermost heating element, $rn$ is a distance from the center of rotation of the medium to the center of the n-th heating element and $Ln$ is a dimension in the sub scanning direction dimension of the n-th heating element. Consequently, the print pixels formed by the heating elements can be elaborately arranged. Moreover, the heating elements may be of a rectangular shape, of a trapezoidal shape having a short side at the medium center side, or of a fan shape. In this case, the largest one of the dimensions in the sub scanning direction of the heating elements is $Ln$.

Moreover, the invention provides a rotary printing thermal head for printing in a main scanning direction along a radial direction of a disk print medium, comprising:

a plurality of heating elements arranged in a line;
wherein an inner heating element has a higher electric resistance value than that of an outer heating element.

According to the invention, since an inner heating element has a higher electric resistance value than that of an outer heating element, when the thermal head is driven at a constant voltage, the inner heating element generates a smaller amount of heat than that of the outer heating element. Consequently, density variations due to circumferential velocity differences among tracks can be corrected by compensating by the characteristic that for an inner track the circumferential velocity is lower or the print density is higher, as compared with an outer track.

Here, it is preferable that a relationship $Rn=R1\times r1/rn$ is satisfied, wherein with respect to the outermost heating element printing the outermost track of the disk print medium, $r1$ is a distance from the center of rotation of the medium to the center of the outermost heating element, $R1$ is an electrical resistance value of the outermost heating element, $rn$ is a distance from the center of rotation of the medium to the center of the n-th heating element and $Rn$ is an electrical resistance value of the n-th heating element. Consequently, the heat generation amounts of the heating elements can be adjusted in accordance with variations in the circumferential velocity of the medium.

Moreover, the invention provides a rotary printing apparatus comprising:

the above-described rotary printing thermal head; and
medium rotating means for rotating the disk print medium in a sub scanning direction along a circumferential direction of the disk print medium,
wherein an image composed of a plurality of pixels arranged in the radial and circumferential directions of the disk print medium is formed based on image data supplied from an external host.

According to the invention, problems of density variations due to the configuration and arrangement of the print pixels or circumferential velocity differences among tracks, specific to the rotary printing method are solved, so that high-quality images can be realized on the disk print medium.

Brief Description of Drawings

FIG. 1 is a perspective view explaining a thermal recording method according to the invention.

FIG. 2A is a cross-sectional view showing the structure of a heat-sensitive print sheet 21 used as a disk print medium M of FIG. 1 and FIG. 2B is a cross-sectional view showing the structure of a medium 19 in which the heat-sensitive print sheet 21 is pasted to an optical disk 20.

FIG. 3 is a block diagram showing the electrical structure of a rotary printing apparatus 10.

FIG. 4 is a timing chart showing the operation of the rotary printing apparatus 10.

FIGs. 5A to 5F are views showing printing steps of the disk print medium M.

FIG. 6 is an explanatory view showing an overlap-printing area RD on the disk print medium M.

FIGs. 7A and 7B are buffer developing views of image data of the disk print medium M, FIG. 7A showing the case of non-overlap-printing and FIG. 7B showing the case of overlap-printing.

FIG. 8 is an explanatory view showing a first example of the overlap-printing operation.

FIGs. 9A and 9B are flowcharts of data development of the first example.

FIG. 10 is an explanatory view showing a second example of the overlap-printing operation.

FIGs. 11A and 11B are flowcharts of data development of the second example.

FIGs. 12A and 12B are explanatory views showing a third example of the overlap-printing operation.

FIGs. 13A and 13B are flowcharts of data development of the third example.

FIG. 14 is an explanatory view showing a rotary printing operation according to the invention.

FIG. 15 is a timing chart showing a wavelength of power supplied to a thermal head 11.

FIG. 16 is a graph explaining a density variation correction method.

FIG. 17 is a circuit diagram showing an example of a drive circuit of the thermal head 11.

FIG. 18 is an explanatory view showing an example of the internal structure of the thermal head 11.

FIG. 19 is an explanatory view showing a concrete example of heating elements 11a of the thermal head 11.

FIG. 20 is a circuit diagram showing another example of the drive circuit of the thermal head 11.

Best Mode for Carrying out the Invention

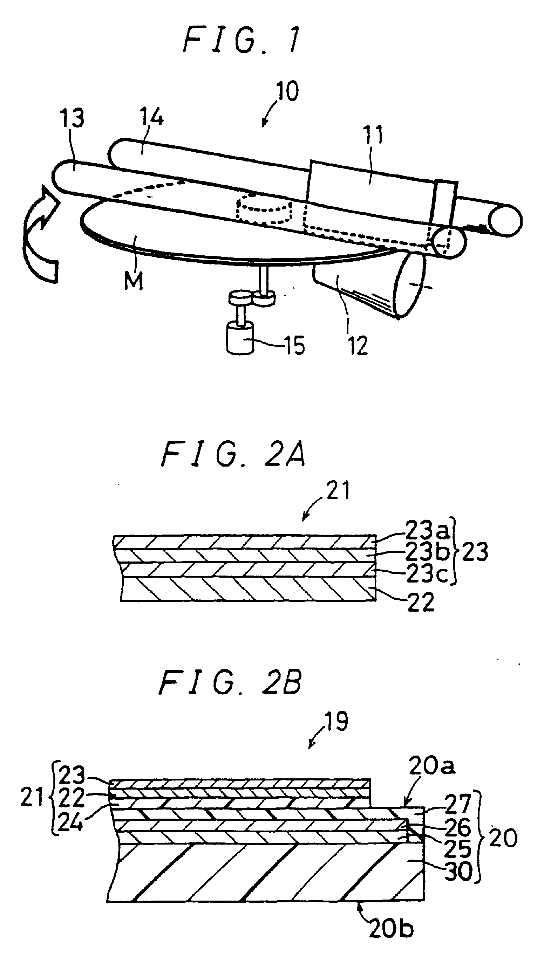

FIG. 1 is a perspective view explaining a thermal recording method according to the invention. A rotary printing apparatus 10 comprises a thermal head 11, a backup roller 12 and cathode tubes 13 and 14, for printing on a disk print medium M. The disk print medium M is a disk-shaped print medium having heat-sensitive coloring layers which are colored when heat is applied. The thermal head 11 is a line thermal head extending in the radial direction of the disk print medium M. A stepping motor 15 rotates the disk print medium M about its axis. The backup roller 12, whose surface is covered with rubber, supports the disk print medium M from its rear surface against the pressure to its top surface by the thermal head 11, and rotates as the disk print medium M rotates. The cathode tubes 13 and 14 emit ultraviolet rays of wavelengths at which the coloring layers of the disk print medium M are fixed.

Printing of the rotary printing apparatus 10, in which the radial direction of the diskprint medium M is the main scanning direction and the circumferential direction of the disk print medium M is the sub scanning direction, is carried out by selectively supplying heat to pixel areas arranged in the radial and circumferential directions of the disk print medium M to color them.

The thermal head 11 as shown in FIG. 1 may be a serial head capable of scanning in the radial direction of the disk print medium M. Moreover, a turntable 31 may be used in place of the backup roller 12 as shown in FIG. 1.

FIG. 2A is a cross-sectional view showing the structure of a heat-sensitive print sheet 21 used as the disk print medium M as shown in FIG. 1. FIG. 2B is a cross-sectional view showing the structure of a medium 19 in which the heat-sensitive print sheet 21 is pasted on an optical disk 20.

The heat-sensitive print sheet 21 as shown in FIG. 2A has a cross-sectional structure similar to those of multicolor heat-sensitive record sheets described in Japanese Unexamined Patent Publications JP-A3-43293 (1991) and JP-A 5-69566 (1993). The printing method of coloring a multicolor heat-sensitive record sheet by applying heat to the sheet is called a TA (thermo-auto chrome) method. The rotary printing apparatus 10 of this embodiment is also a TA printer.

In the heat-sensitive print sheet 21, a heat-sensitive coloring layer 23 is formed on the surface of a base material 22 such as paper, and the plane shape of the sheet 21 is a disk shape. The heat-sensitive coloring layer 23 is composed of a yellow coloring layer 23a, a magenta coloring layer 23b and a cyan coloring layer 23c.

The yellow coloring layer 23a contains a yellow pigment material encapsulated in microcapsules and a coupler.

By applying thermal energy of 20 mJ/mm$^2$ or more, the pigment material passes through the microcapsules to react with the coupler, so that the layer 23a is colored. Moreover, by applying ultraviolet rays of a wavelength of 420 nm to the yellow coloring layer 23a, the unreacted yellow pigment material is decomposed, so that coloring does not continue any more.

The magenta coloring layer 23b contains a magenta pigment material encapsulated in microcapsules and a coupler. By applying thermal energy of not less than 40 mJ/mm$^2$, the pigment material passes through the microcapsules to react with the coupler, so that the layer 23b is colored. Moreover, by applying ultraviolet rays of a wavelength of 365 nm to the magenta coloring layer 23b, the unreacted magenta pigment material is decomposed, so that coloring does not progress any more.

The cyan coloring layer 23c contains a dye encapsulated in microcapsules, and is colored by applying thermal energy of approximately 80 mJ/mm$^2$ or more.

The thermal head 11 as shown in FIG. 1 is capable of supplying any of thermal energy of 20 mJ/mm$^2$ to 40 mJ/mm$^2$, thermal energy of 40 mJ/mm$^2$ to 80 mJ/mm$^2$ and thermal energy of 80 mJ/mm$^2$ to 120 mJ/mm$^2$. The cathode tube 13 emits ultraviolet rays of a wavelength of 420 nm to fix the yellow coloring layer 23a. The cathode tube 14 emits ultraviolet rays of a wavelength of 365 nm to fix the magenta coloring layer 23b.

In the medium 19 as shown in FIG. 2B, the heat-sensitive print sheet 21 is pasted on the print surface 20a of the optical disk 20 such as a CD-R with an adhesive layer 24 in between.

In the optical disk 20, an organic pigment layer 25, a reflective layer 26 made of metal and a protective layer 27 are laminated in this order on a polycarbonate substrate 30. For the optical disk 20, data recording is performed by phase-changing the organic pigment layer 25 by applying a laser beam from the record surface 20b. The optical disk 20 usable for the rotary printing apparatus 10 is not limited to a disk having such a structure, but may be, for example, a CD, CD-ROM or CD-RW (rewritable) . Moreover, the optical disk 20 may be a DVD (digital video disk) -ROM, DVD-RAM (random access memory), DVD-R, DVD-RW or the like.

As the disk print medium M, the heat-sensitive print sheet 21 as shown in FIG. 2A may be used as it is, or the medium 19 as shown in FIG. 2B may be used. When the heat-sensitive print sheet 21 is used as it is, the heat-sensitive print sheet 21 can be pasted on the optical disk 20 after printing. Moreover, the heat-sensitive coloring layer 23 may be directly formed on the optical disk 20 by vapor deposition or the like.

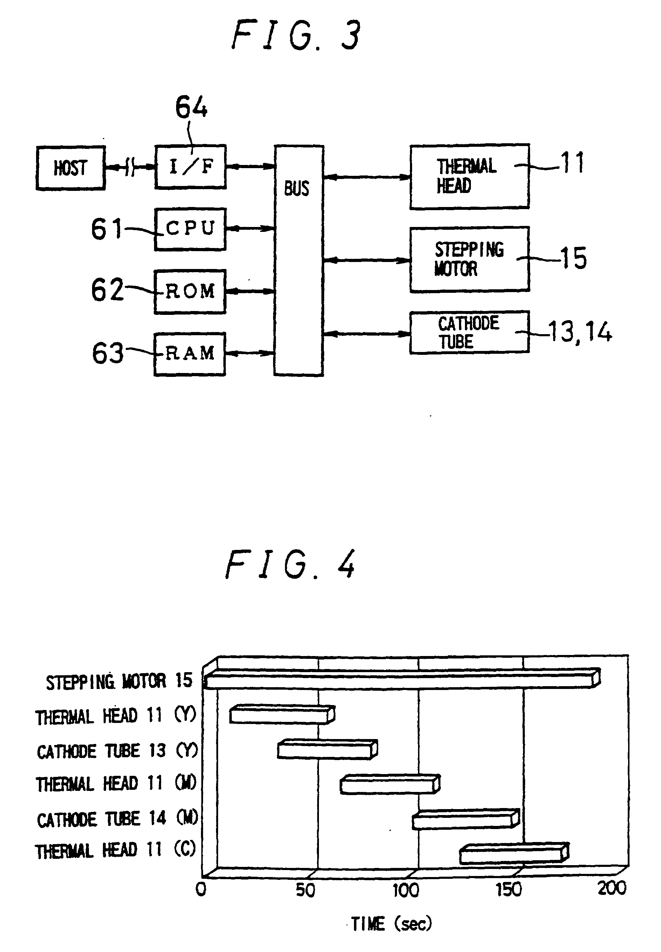

FIG. 3 is a block diagram showing the electrical structure of the rotary printing apparatus 10. An interface (I/F) 64 performs data transmission with an external host such as a personal computer through communication such as parallel communication or serial communication, for example, receives image data to be printed from the external host and transmits status data representative of the operation condition of the printing apparatus 10. A CPU (central processing unit) 61 operates in accordance with a predetermined program stored in a ROM (read only memory) 62 or the like, and controls general operations such as processing of signals for the thermal head 11 and operations of the stepping motor 15 and the cathode tubes 13 and 14. The ROM 62 is a nonvolatile memory in which the program for the CPU 61 and various data are stored.

A RAM 63 is a volatile memory in which printing data and various data are stored, and functions also as a buffer memory for continuously expanding image data thereinto. The function of the buffer memory for data development may be assigned to a memory on the side of the external host to thereby save the memory capacity on the side of the printing apparatus 10.

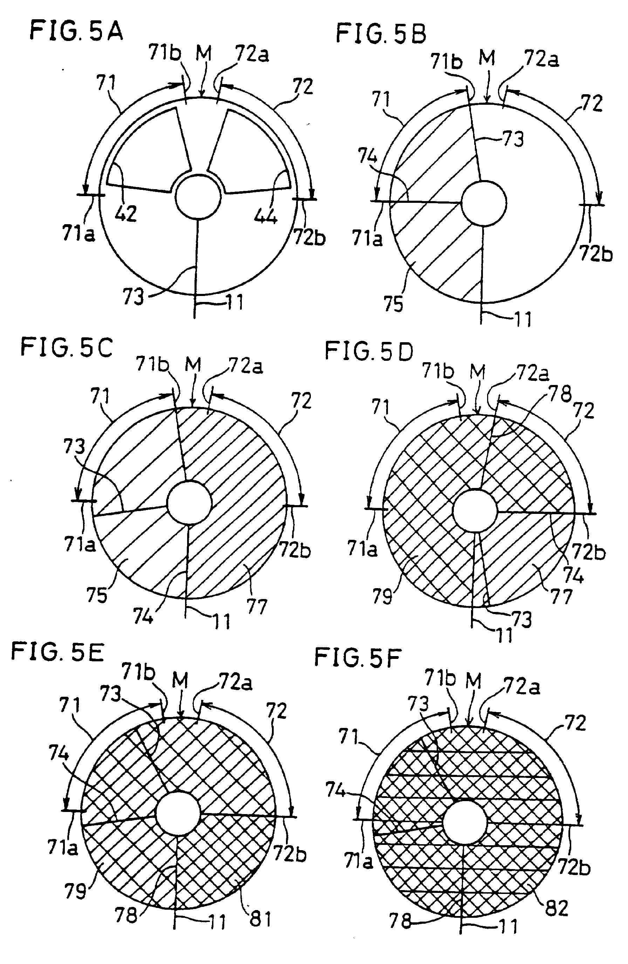

FIG. 4 is a timing chart showing the operation of the rotary printing apparatus 10. FIGs. 5A to 5F are views stepwisely showing the print condition of the disk print medium M. When printing is started, the data of a print image produced by the external host is transmitted to the thermal head 11 through the I/F 64, the CPU 61 and the like. At the same time, energization of the stepping motor 15 is started, so that the stepping motor 15 rotates the disk print medium M at predetermined rotation speed.

In FIG. 5A, energization of the thermal head 11 is started, and thermal energy of the lowest heat-sensitive coloring level is applied to the disk print medium M. Consequently, the yellow coloring layer 23a is colored. Then, as shown in FIG. 5B, when a forefront line 73 of a colored area 75 of the yellow coloring layer 23a reaches a rearmost part 71b of a light irradiated area 71, energization of the cathode tube 13 is started. Consequently, light from the cathode tube 13 is applied to the disk print medium M. The light irradiated area 71 is an area irradiated with light from the cathode tube 13. Then, when the forefront line 73 has reached the thermal head 11 again, energization of the thermal head 11 is stopped to end coloring of the yellow coloring layer 23a.

Then, as shown in FIG. 5C, when a forefront line 74 of a fixed area 77 where fixing of the yellow coloring layer 23a is completed reaches the thermal head 11, energization of the thermal head 11 is started, and thermal energy of the second lowest heat-sensitive coloring level is applied to the disk print medium M. Consequently, coloring of the magenta coloring layer 23b is started from the forefront line 74. Then, when the forefront line 74 of the fixing-completed area of the yellow coloring layer again reaches the rearmost part 71b of the light irradiated area 71, energization of the cathode tube 13 is stopped to end fixing of the yellow coloring layer 23a.

Then, as shown in FIG. 5D, when the forefront line 74 of a colored area 79 where the magenta coloring layer 23b is colored reaches a rearmost part 72b of a light irradiated area 72, energization of the cathode tube 14 is started. Consequently, light from the cathode tube 14 is applied to the disk print medium M, so that the magenta coloring layer 23b is fixed. The light irradiated area 72 is an area irradiated with light from the cathode tube 14. Then, when the forefront line 74 of the colored area of the magenta coloring layer reaches the thermal head 11, energization of the thermal head 11 is stopped to end coloring of the magenta coloring layer 23b.

Then, as shown in FIG. 5E, when a forefront line 78 of a fixed area 81 where fixing of the magenta coloring layer 23b is completed reaches the thermal head 11, energization of the thermal head 11 is started, and thermal energy of the highest heat-sensitive coloring level is applied to the disk print medium M. Consequently, coloring of the cyan coloring layer 23c is started from the forefront line 78. Then, when the forefront line 78 of the fixing-completed area of the magenta coloring layer again reaches the rearmost part 72b of the light irradiated area 72, energization of the cathode tube 14 is stopped to end fixing of the magenta coloring layer 23b.

Then, as shown in FIG. 5F, when the forefront line 78 of the colored area of the cyan coloring layer again reaches the thermal head 11, energization of the thermal head 11 is stopped to end coloring of the cyan coloring layer 23c. At this time, the disk print medium M is all covered with a colored area 82 where the cyan coloring layer 23c is colored, and printing is completed.

By successively performing coloring and fixing of the yellow coloring layer 23a, coloring and fixing of the magenta coloring layer 23b and coloring of the cyan coloring layer 23c as described above, full-color printing can be performed. (Image Seam Processing)

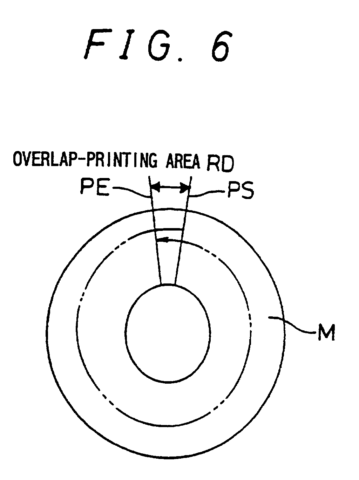

FIG. 6 is an explanatory view showing an overlap-printing area RD on the disk print medium M. While a printing operation for one color will be described for ease of understanding, in the case of a full-color print image, a similar operation is carried out for three colors. Printing for one color by the thermal head 11 starts from a printing start position PS, continues for one round (360 degrees) of the disk print medium M, further continues in the overlap-printing area RD for overlap-printing, and ends at a printing end position PE. By forming such a overlap-printing area RD, the image position shift, density variations and the like at the printing start position PS and printing end position PE are spatially leveled, so that the seam of the print image becomes inconspicuous to the naked eye.

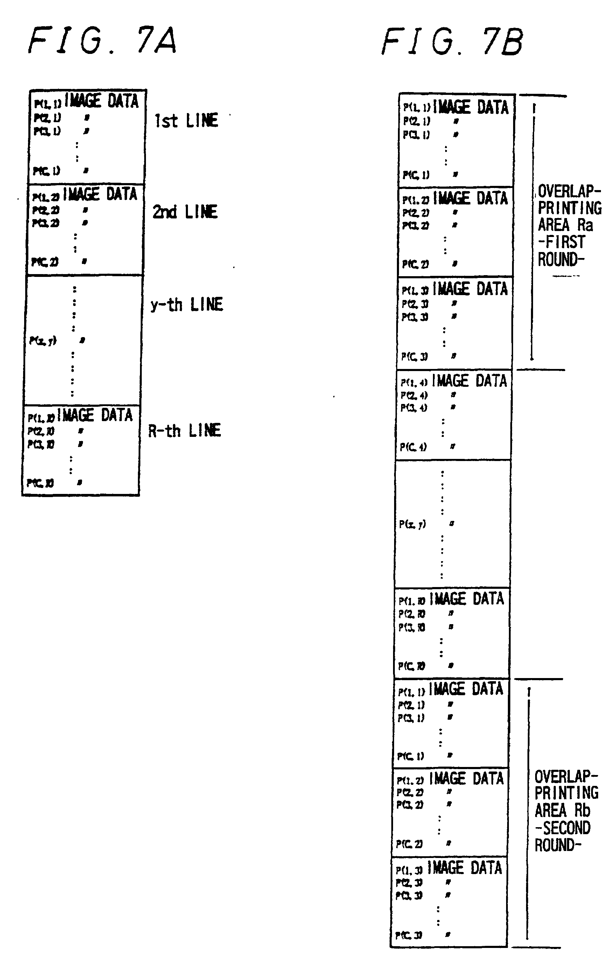

FIGs. 7A and 7B are buffer development views of image data of the disk print medium M. FIG. 7A shows the case where the overlap-printing is not carried out. FIG. 7B shows a case where the overlap-printing is carried out. When the overlap- printing is not carried out, it is enough to develop only the image data corresponding to one round of the disk print medium M, and pixels of the number corresponding to the product C×R of the number of main scanning lines C and the number of sub scanning lines R are developed. When the overlap-printing is carried out, as shown in FIG. 7B, the image data of an overlap-printing area Ra extending a predetermined length (corresponding to three pixels in this example) from the printing start position PS, the image data of the non-overlap-printing area and the image data of an overlap-printing area Rb extending a predetermined length (corresponding to three pixels in this example) from the printing end position PE toward the printing start position PS are continuously developed, and as a result, pixels of the number corresponding to C × 3+C × (R-3 ) +C × 3=C × (R+3) are developed.

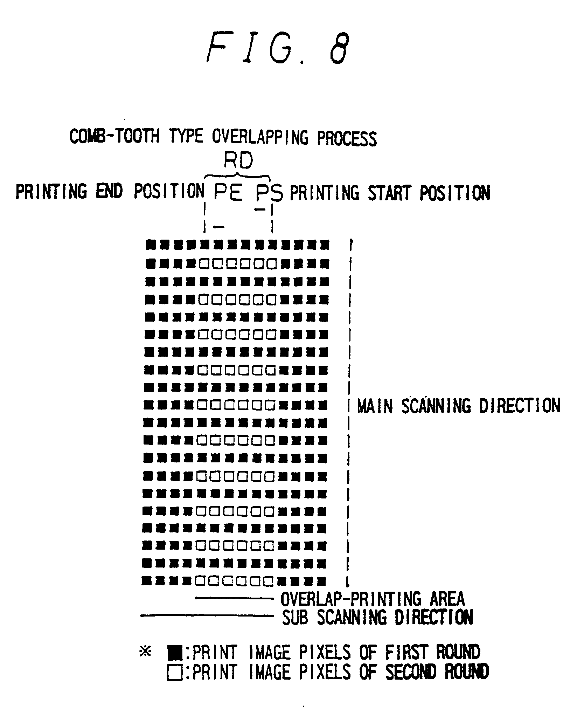

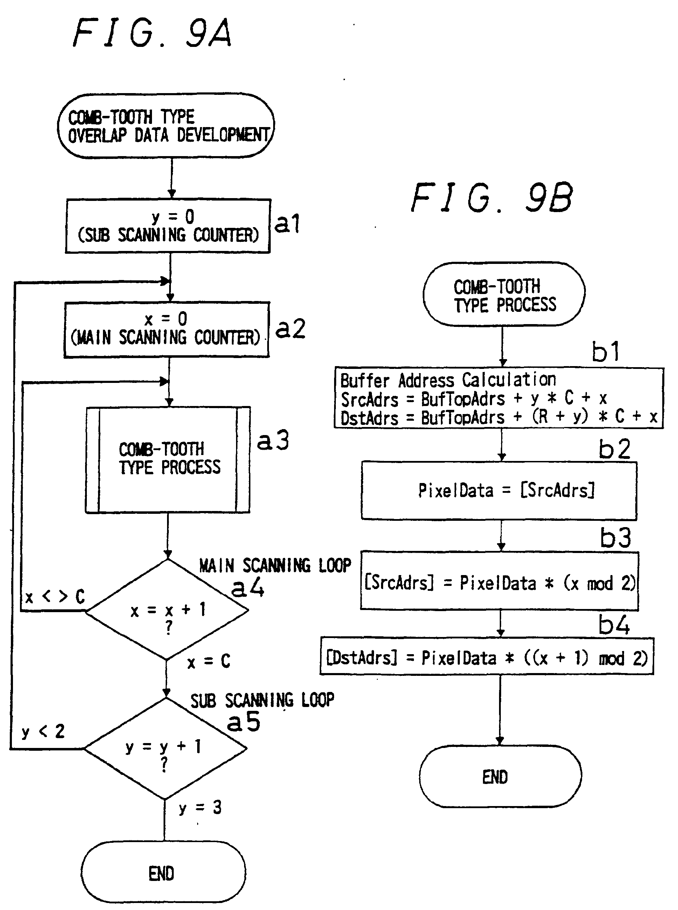

FIG. 8 is an explanatory view showing a first example of the overlap-printing operation. FIGs. 9A and 9B are flowcharts of data development. In FIG. 8, the black squares ■ represent print image pixels of the first round (360 degrees) from the printing start position PS, and the hollow squares □ represent print image pixels of the second round. For example, the pixels are arranged in a matrix with 320 pixels in the main scanning direction of the thermal head 11 and 2940 pixels in the rotation sub scanning direction. In this example, processing to dispose the sub scanning lines of the first round and the sub scanning lines of the second round so as to alternate every predetermined number of lines (one line in FIG. 8) in the overlap-printing area RD, so-called comb-tooth type overlapping process will be described. The length of the overlap-printing area RD is at least equal to or larger than the length corresponding to one pixel in the sub scanning direction. FIG. 8 shows an example in which the print image overlaps by the length corresponding to six pixels in the sub scanning direction. FIG. 7B and FIGs. 9A and 9B explain an example in which the print image overlaps by the length corresponding to three pixels.

In data development, a procedure is adopted in which after the image data corresponding to one round of the disk print medium M is developed into the buffer memory as shown in FIG. 7A, the image data of the overlap-printing area Ra of the first round and the overlap-printing area Rb of the second round is produced and developed as shown in FIG. 7B.

First, as shown in FIG. 9A, the value y of a sub scanning counter and the value x of a main scanning counter are initialized to zero at steps a1 and a2, and after the pixel-by-pixel comb-tooth type process shown in FIG. 9B is carried out at step a3, at step a4, loop processing corresponding to one scanning is carried out until the main scanning counter value x coincides with the number of main scanning lines C (for example, 320). Then, at step a5, loop processing is carried out until the sub scanning counter value y coincides with the number of overlapping pixels (for example, three pixels).

In FIG. 9B, at step b1, the pixel address *SrcAdrs* of the overlap-printing area Ra of the first round and the pixel address *DstAdrs* of the overlap-printing area Rb of the second round are calculated by use of the buffer top address *BufTopAdrs*, the main scanning counter value x, the sub scanning counter value y, the number of main scanning lines C and the number of sub scanning lines R. At step b2, the data *PixelData* of the target pixel represented by the pixel address SrcAdrs of the overlap-printing area Ra is extracted. At step b3, using a surplus operator *mod*, when the main scanning counter value x is an even number, the data of the overlap-printing area Ra is made zero, and when the main scanning counter value x is an odd number, the data *PixelData* of the overlap-printing area Ra is left as it is. At step b4, contrary to step b3, using the surplus operator *mod*, when the main scanning counter value x is an even number, the data *PixelData* of the overlap-printing area Rb is left as it is, and when the main scanning counter value x is an odd number, the data of the overlap-printing area Rb is made zero. In this manner, the comb-tooth type overlapping process is carried out so that the odd-numbered sub scanning lines of the overlap-printing area Ra and the even-numbered sub scanning lines of the overlap-printing area Rb are placed so as to alternate with each other.

By forming the overlap-printing area RD by use of the image data having undergone such processing, the seam of the print image becomes inconspicuous to the naked eye, and the variation in the density between the overlap-printing area and the non-overlap-printing area can be suppressed. This enables seam processing so smooth that the overlap-printing area and the non-overlap-printing area cannot be distinguished by the naked eye.

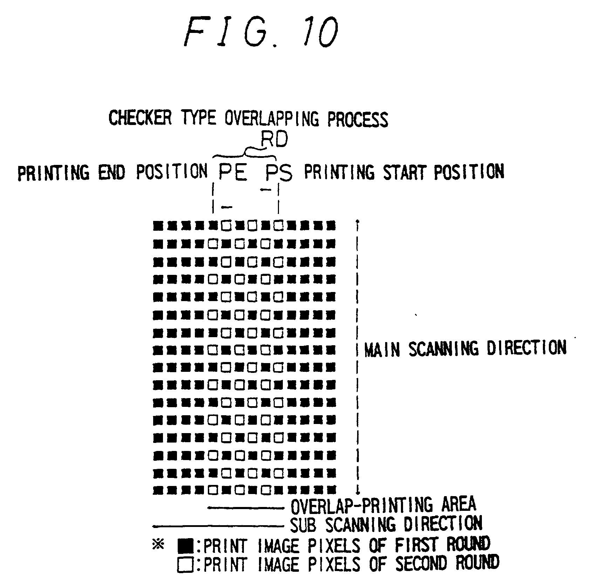

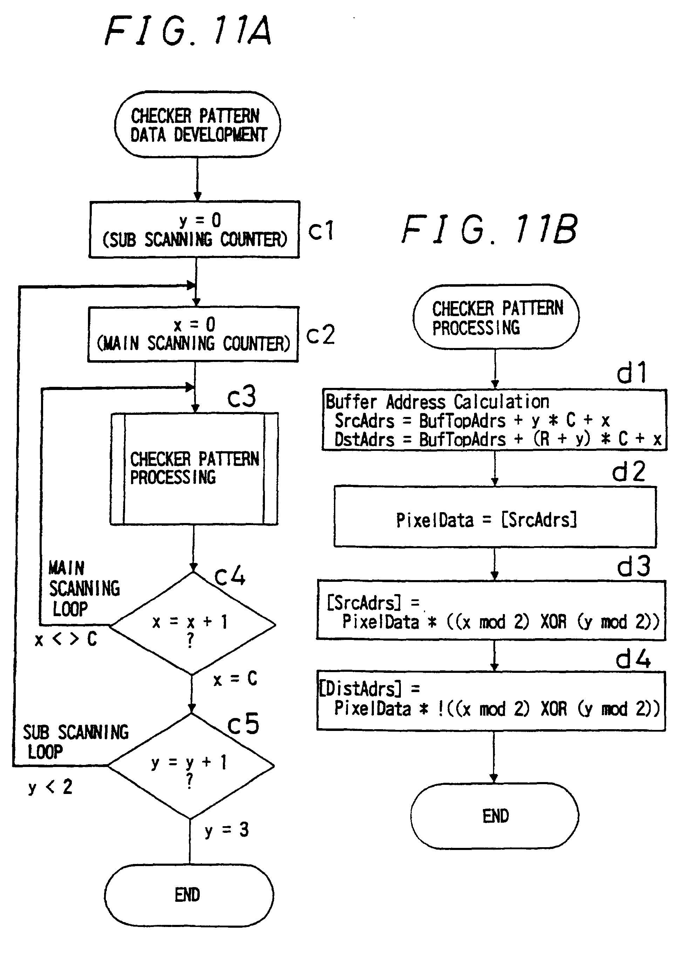

FIG. 10 is an explanatory view showing a second example of the overlap-printing operation. FIGs. 11A and 11B are flowcharts of data development. In FIG. 10, the black squares ■ represent print image pixels of the first round from the printing start position PS, and the hollow squares □ represent print image pixels of the second round. For example, the pixels are arranged in a matrix with 320 pixels in the main scanning direction of the thermal head 11 and 2940 pixels in the rotation sub scanning direction. In this example, processing to two-dimensionally dispose the pixels of the first round and the pixels of the second round so as to alternate every predetermined number of pixels (one pixel in FIG. 10) in the overlap-printing area RD, so-called checker-type overlapping process will be described. The length of the overlap-printing area RD is at least equal to or larger than the length corresponding to one pixel in the sub scanning direction. FIG. 10 shows an example in which the print image overlaps by the length corresponding to six pixels in the sub scanning direction. FIGs. 11A and 11B explain an example in which the print image overlaps by the length corresponding to three pixels.

In data development, a procedure is adopted in which after the image data corresponding to one round of the disk print medium M is developed into the buffer memory as shown in FIG. 7A, the image data of the overlap-printing area Ra of the first round and the overlap-printing area Rb of the second round is produced and developed as shown in FIG. 7B.

First, as shown in FIG. 11A, the value y of the sub scanning counter and the value x of the main scanning counter are initialized to zero at steps c1 and c2, and after the pixel-by-pixel checker pattern processing shown in FIG. 11B is carried out at step c3, at step c4, loop processing corresponding to one scanning is carried out until the main scanning counter value x coincides with the number of main scanning lines C (for example, 320). Then, at step c5, loop processing is carried out until the sub scanning counter value y coincides with the number of overlapping pixels (for example, three pixels).

In FIG. 11B, at step d1, the pixel address *SrcAdrs* of the overlap-printing area Ra of the first round and the pixel address *DstAdrs* of the overlap-printing area Rb of the second round are calculated by use of the buffer top address *BufTopAdrs*, the main scanning counter value x, the sub scanning counter value y, the number of main scanning lines C and the number of sub scanning lines R. At step d2, the data *PixelData* of the target pixel represented by the pixel address *SrcAdrs* of the overlap-printing area Ra is extracted. At step d3, using the surplus operator *mod* and an exclusive OR operator XOR, when the main scanning counter value x and the sub scanning counter value y are (x, y) =(an even number, an even number) or (an odd number, an odd number) , the data *PixelData* of the overlap-printing area Ra is left as it is, and when (x, y) = (an even number, an odd number) or (an odd number, an even number), the data of the overlap-printing area Ra is made zero. At step d4, contrary to step d3, using a NOT operator !, when (x, y) =(an even number, an even number) or (an odd number, an odd number) , the data of the overlap-printing area Ra is made zero, and when (x, y)=(an even number, an odd number) or (an odd number, an even number) , the data *PixelData* of the overlap-printing area Ra is left as it is. In this manner, the checker-type overlapping process is carried out so that the pixels of the overlap-printing area Ra and the pixels of the overlap-printing area Rb are placed so as to alternate with each other.

By forming the overlap-printing area RD by use of the image data having undergone such processing, the seam of the print image becomes inconspicuous to the naked eye, and the difference in the density between the overlap-printing area and the non-overlap-printing area can be suppressed. This enables seam processing so smooth that the overlap-printing area. and the non-overlap-printing area cannot be distinguished by the naked eye. In addition, since the variations between the areas are dispersed in a two-dimensional direction, the seam becomes more inconspicuous.

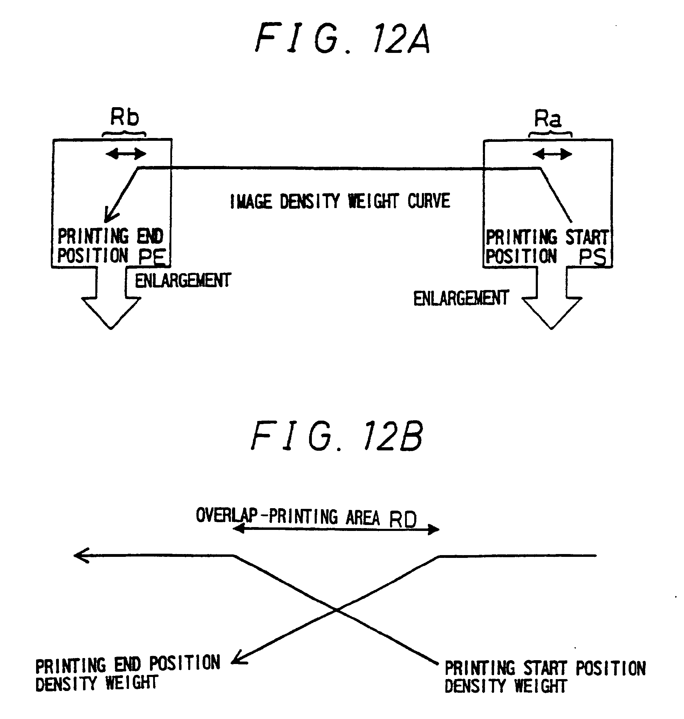

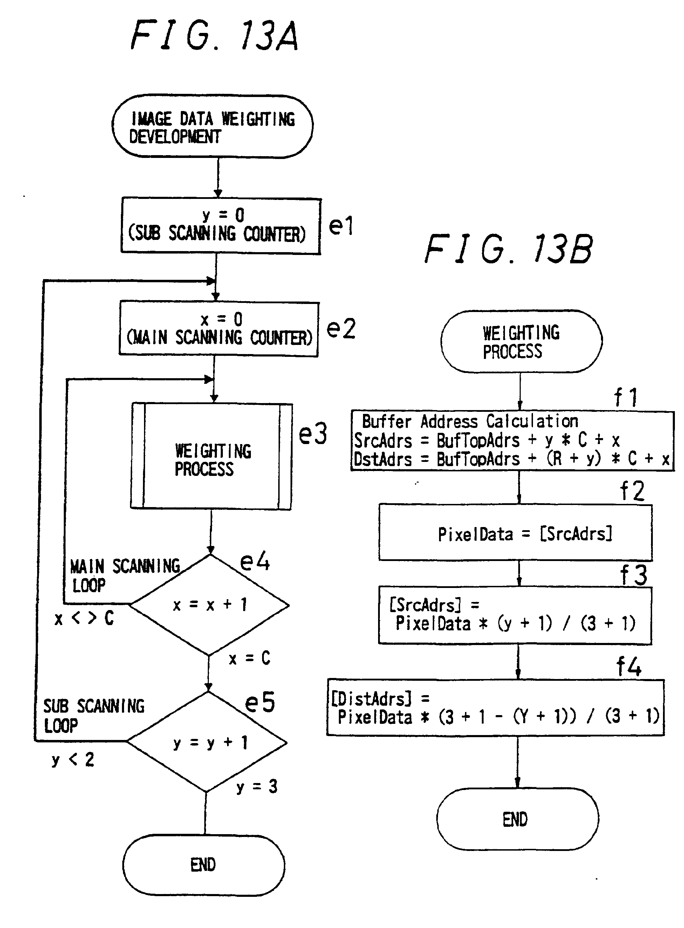

FIGs. 12A and 12B are explanatory views showing a third example of the overlap-printing process. FIGs. 13A and 13B are flowcharts of data development. FIG. 12A shows an image density weight curve where the pixel density of the overlap-printing area Ra extending the predetermined length from the printing start position PS monotonously increases, the pixel density of the non-overlap-printing area is maintained constant and the pixel density of the overlap-printing area Rb extending backward the predetermined length from the printing end position PE monotonously decreases. The actual print image data is the product of the *pixel data* and the image weight density. FIG. 12B shows a manner of density distribution between the first round and the second round in the overlap-printing area RD. In this example, processing by pixel density variations, so-called image weighting process will be described.

In data development, a procedure is adopted in which after the image data corresponding to one round of the disk print medium M is developed into the buffer memory as shown in FIG. 7A, the image data of the overlap-printing area Ra of the first round and the overlap-printing area Rb of the second round is produced and developed as shown in FIG. 7B.

First, as shown in FIG. 13A, the value y of the sub scanning counter and the value x of the main scanning counter are initialized to zero at steps e1 and e2, and after the pixel-by-pixel weighting process as shown in FIG. 13B is carried out at step e3, at step e4, loop processing corresponding to one scanning is carried out until the main scanning counter value x coincides with the number of main scanning lines C (for example, 320). Then, at step e5, loop processing is carried out until the sub scanning counter value y coincides with the number of overlapping pixels (for example, three pixels).

In FIG. 13B, at step f1, the pixel address ScrAdrs of the overlap-printing area Ra of the first round and the pixel address *DstAdrs* of the overlap-printing area Rb of the second round are calculated by use of the buffer top address *BufTopAdrs*, the main scanning counter value x, the sub scanning counter value y, the number of main scanning lines C and the number of sub scanning lines R. At step f2, the data *PixelData* of the target pixel represented by the pixel address SrdAdrs of the overlap-printing area Ra is extracted. At step f3, the data of the overlap-printing area Ra is corrected so that, with the density of the original data *PixelData* being 100%, the density gradually increases to 25%, 50% and 75% in the sub scanning direction. At step f4, contrary to step f3, the data of the overlap-printing area Rb is corrected so that, with the density of the original data *PixelData* being 100%, the density gradually decreases to 75%, 50% and 25% in the sub scanning direction. In this manner, the pixel density of the overlap-printing area Ra and the pixel density of the overlap-printing area Rb are combined.

By forming the overlap-printing area RD by use of the image data having undergone such processing, the seam of the print image becomes inconspicuous to the naked eye, and the difference in the density between the overlap-printing area and the non-overlap-printing area can be suppressed. This enables seam processing so smooth that the overlap-printing area and the non-overlap-printing area cannot be distinguished by the naked eye. In addition, since the variations between the areas are dispersed in spatial two-dimensional and density directions, that is, a three-dimensional direction in total, the seam becomes more inconspicuous.

While an example using the disk print medium M as the record medium is shown in the description given above, the invention is applicable to the case of a medium where an image which continues in the sub scanning direction is printed such as a conical medium or a cylindrical medium such as an electrophotographic photoconductor drum.

While overlap-printing for one color when the disk print medium M is used has been described, the invention is similarly applicable to color printing of two or more colors. In that case, the printing start position PS and the printing end position PE are varied among the colors so that the position of the overlap-printing area RD is varied among the colors, whereby a high-quality color image can be obtained.

When a TA thermal print medium is used, it is desirable that the fixing light application start timing is set after the overlap-printing area RD.

(Correction of Density Variations Among Tracks)

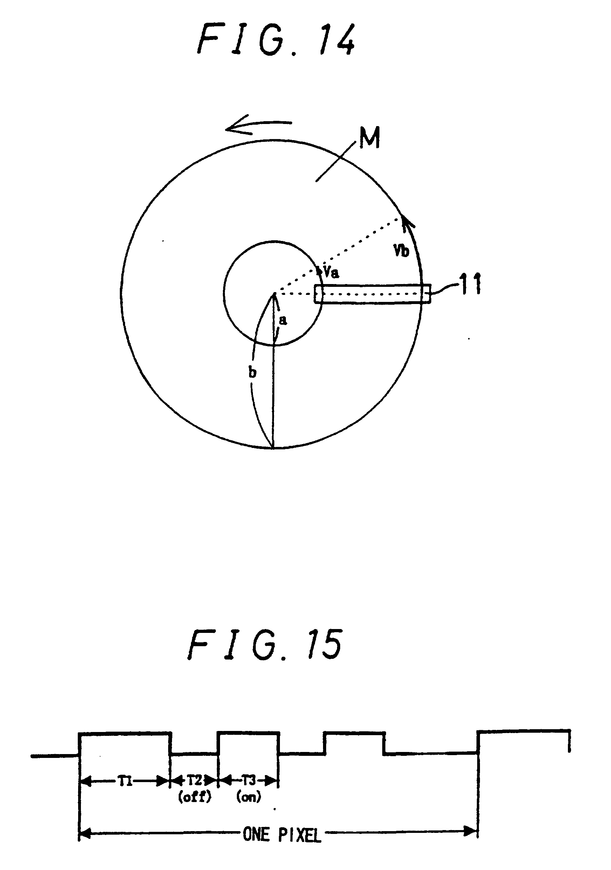

FIG. 14 is an explanatory view showing the rotary printing operation according to the invention. The thermal head 11 is disposed in the radial direction of the disk print medium M, to print while rotating the disk print medium M counterclockwise. At this time, a relationship Vb/Va=b/a holds between the inner linear velocity Va at the innermost track radius a of the print area and the outer linear velocity Vb at the outermost track radius b of the print area.

In a case where such circumferential velocity differences among tracks are present, when the thermal head 11 emits uniform print energy in the radial direction to all the tracks, the print energy per unit area is higher the closer to the center, so that density variations are caused such that the print density is higher the closer to the center and is lower the closer to the periphery.

Therefore, by the print energy emitted by the thermal head 11 being lower the closer to the center and being higher the closer to the periphery, the density variations in the radial direction can be corrected.

FIG. 15 is a timing chart showing a wavelength of power supplied to the thermal head 11. In the case of gradation printing by the thermal recording method, a method is considered in which the print density is varied by varying the print energy per pixel. In this description, an example in which the energizing time per pixel is varied is shown.

When one pixel is printed, as shown in FIG. 15, the energizing time per pixel can be controlled by performing bias energization with a width T1 at the beginning and then, controlling the number of repetitions d of the pulse string having a fixed duty ratio (=T3/(T2+T3)). For example, the pulse widths are T1=1130. 5 µs, T2=16 µs and T3=36 µs, and the head application voltage is 16 V. The bias energization is applied for compensating for the heat hysteresis of before the start of the printing operation, and the pulse width T1 may be varied according to the head temperature or the like. The number of repetitions d of the pulse string after the bias energization, can be controlled in a range, for example, from 0 to 255. The density is lowest when d=0 and is highest when d=255, and the number of gradation levels is 256.

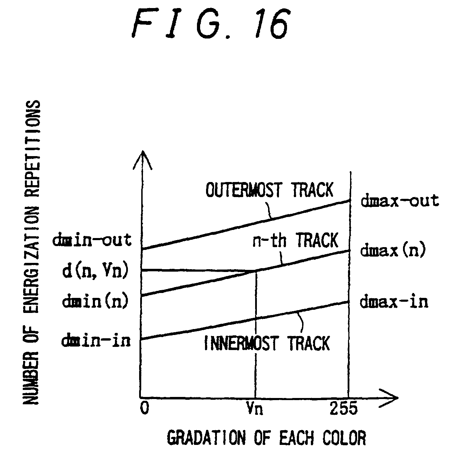

FIG. 16 is a graph explaining a method of the density variation correction. The vertical axis represents the number of repetitions d of the energization pulse, and the horizontal axis represents the gradation level of each color. The lowermost line represents the gradation characteristic in a case where the innermost track (radius a) of the print area is printed. When the gradation level is 0, the number of repetitions d is set to *dmin-in*, and when the gradation level is 255, the number of repetitions d is set to *dmax-in*. At the middle gradation level Vn, the number of repetitions d is the proportional allotment of *dmin-in* and *dmax-in.* Likewise, the uppermost line represents the gradation characteristic in a case where the outermost track (radius b) of the print area is printed. When the gradation level is 0, the number of repetitions d is set to *dmin-out*, and when the gradation level is 255, the number of repetitions d is set to *dmax-out.* At the middle gradation level Vn, the number of repetitions d is the proportional allotment of *dmin-out* and *dmax-out*.

The gradation characteristic of the n-th track corresponds to the line situated in the middle in FIG. 16 when the innermost track radius a of the print area of the disk print medium M is 45.5 mm, the outermost track radius b is 116.5 mm, the resolution is 200 dpi, the number of print tracks is 320, the innermost track is the first track and the outermost track is the 320-th track. Specifically, the number of repetitions d(n, Vn) of the energization pulse corresponding to the gradation level Vn of each color at the n-th track is represented by the following expressions:

$$d(n, Vn) = Vn \times (dmax(n)-dmin(n))/255+dmin(n)$$

$$dmax(n) = (n-1) \times (dmax\text{-}out\text{-}dmax\text{-}in) /319+dmax\text{-}in$$

$$dmin(n) = (n-1) \times (dmin\text{-}out\text{-}dmin\text{-}in) /319+dmin\text{-}in$$

Here, the *dmax-out* represents the number of power supplies at the outermost track at the highest density of each color, *gain-out* represents the number of power supplies at the outermost track at the lowest density of each color, *dmax-in* represents the number of power supplies at the innermost track at the highest density of each color, *dmin-in* represents the number of power supplies at the innermost track at the lowest density of each color, dmax(n) represents the number of power supplies at the n-th track at the highest density of each color, and dmin(n) represents the number of power supplies at the n-th track at the lowest density of each color. This density correction calculation can be easily performed by the CPU 61 of FIG. 3. It is possible that data necessary for the calculation is sent to the external host, and which carries out the density correction calculation on the image data.

According to the TA method, since the heat-sensitive coloring levels of yellow, magenta and cyan are divided, the constants *dmax-out, dmin-out, dmax-in* and *dmin-in* are set, for example, to the following values:

Table 1

|         | dmax-out | dmin-out | Dmax-in   | dmin-in  |
|---------|----------|----------|-----------|----------|
| Yellow  | 78       | 16       | 50(73%)   | 6(75%)   |
| Magenta | 145      | 48       | 96(71%)   | 30(75%)  |
| Cyan    | 185      | 100      | 118(68%)  | 63(70%)  |

Here, the parenthesized values of *dmax-in* and *dmin-in* represent in percentage the ratio of the head energy amount at the innermost track to that at the outermost track.

By thus controlling the energizing time per pixel of the thermal head 11 so as to be longer for an outer pixel than for an inner pixel, the density variations due to the circumferential velocity differences among tracks of the disk print medium M can be eliminated.

While an example using a thermal head suitable for thermal recording is shown in the description given above, the invention is similarly applicable to print heads capable of gradation recording, for example, ink jet heads, laser print heads and wire dot heads.

Moreover, while a method in which the energizing time per pixel is controlled is shown in the description given above, similar density variation correction can be realized by controlling the print head driving voltage so as to be higher for an outer pixel than for an inner pixel.

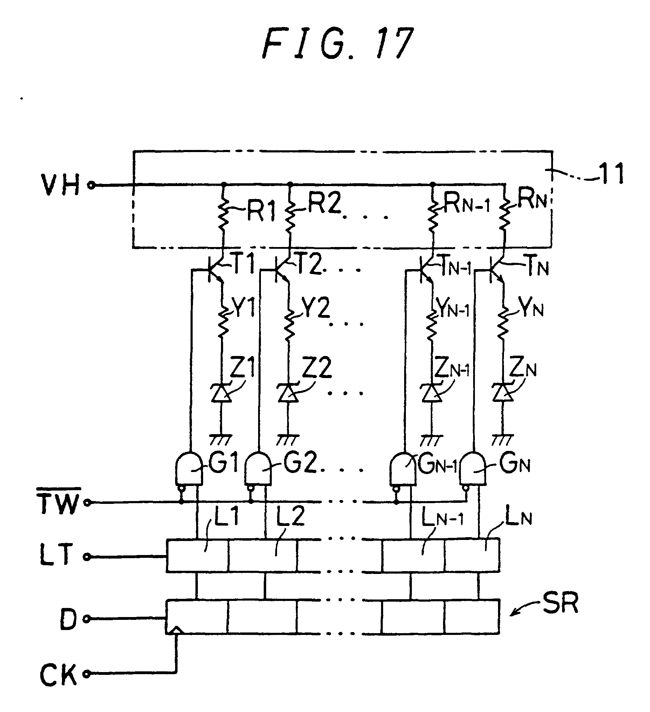

FIG. 17 is a circuit diagram showing an example of a drive circuit of the thermal head 11. The thermal head 11 has a plurality of heating elements R1 to RN arranged in a line. Since the circumferential velocity of the disk print medium M increases as the track radius increases, it is necessary that the heat generation amount is smaller for an inner track than that for an outer track with respect to the heat generation amount at the heating element R1 which prints the outermost track. Therefore, when the electrical resistance values of the heating elements R1 to RN are the same, according to Ohm's Law, applied electric power W = (applied voltage V) $^2$/ (resistance value R), the closer to the center the heating elements, the lower the voltage applied to the heating elements is set.

In the drive circuit of FIG. 17, one ends of the heating elements R1 to RN of the thermal head 11 are connected in common and supplied with a energization voltage VH, and the other ends are individually connected to transistors T1 to TN. Between the emitters of the transistors T1 to TN and the ground, resistive elements Y1 to YN and Zener diodes Z1 to ZN are connected to vary the voltage applied to the heating elements R1 to RN according to the track radius. Image data D is supplied to a shift register SR in synchronism with a clock signal CK, and when transfer of data corresponding to one line is finished, the data is temporarily stored in latches L1 to LN by a latch signal LT. Then, when a write signal TW becomes low, gates G1 to GN control conduction of the transistors T1 to TN in accordance with the image data, so that the heating elements R1 to RN selectively generate heat.

At this time, since the voltages to be applied to the heating elements R1 to RN are set so that an application voltage to an outer heating element is higher than that to an inner heating element, the amount of heat applied to an inner portion of the disk print medium M is smaller than that applied to an outer portion thereof. Consequently, the density variations due to the circumferential velocity variations among tracks can be corrected.

(Heating Elements of Thermal Head)

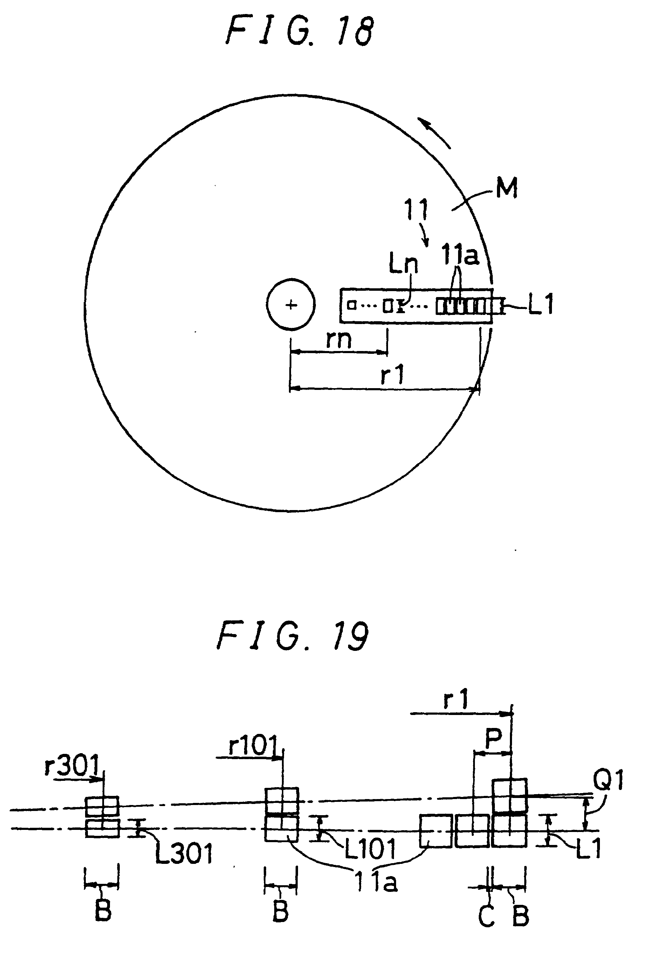

FIG. 18 is an explanatory view showing an example of the internal structure of the thermal head 11. The thermal head 11 has a plurality of heating elements 11a arranged in a line and is disposed in the radial direction of the disk print medium M, and printing is while the disk print medium M is being rotated counterclockwise. At this time, a relationship Ln=L1×rn/r1 holds where, with respect to the outermost heating element 11a which prints the outermost track of the disk print medium M, the distance from the center of rotation of the medium to the center of the outermost heating element 11a is r1, the sub scanning direction dimension of the outermost heating element 11a is L1, the distance from the center of rotation of the medium to the center of the n-th heating element 11a is rn and the sub scanning direction dimension of the n-th heating element 11a is Ln. The main scanning direction dimensions and pitches of the heating elements 11a are constant respectively.

Since an inner heating element 11a has a smaller sub scanning direction dimension Ln than that of an outer heating element as described above, overlaps of inner print pixels and gaps between outer print pixels can be avoided.

FIG. 19 is an explanatory view showing a concrete example of the heating elements 11a of the thermal head 11. When the main scanning direction pitch P of the print pixels formed on the disk print medium M is 200 dpi (=0.127 mm), the sub scanning direction pitch Q1 of the print pixels on the outermost track is 200 dpi, the radius r1 at the outermost track is 59 mm, the radius r301 at the innermost track is 20.9 mm and the number of print tracks is 301, the main scanning direction length B of the heating elements 11a is 0.107 mm and the gap C in the main scanning direction is 0.020 mm.

The sub scanning direction length L1 of the outermost heating element 11a which should coincide with the pixel pitch 200 dpi at the outermost track is 0.127 mm.

Since the radius r101 at the 101st track counted from the outermost track is 46.3 mm (=(301-101)×0.127+20.9), the sub scanning direction pixel pitch Q101 is 0.100 mm (=0.127 × 46.3/59), and the sub scanning direction length L101 of the heating element 11a is also 0.100 mm.

Since the sub scanning direction pixel pitch Q301 at the 301st innermost track is 0.045 mm (=0.127×20.9/59), the sub scanning direction length L301 of the heating element 11a is also 0.045 mm.

By thus making the sub scanning direction pixel pitch and the sub scanning direction length of the heating element 11a at each track coincide with each other as described above, the print pixels formed by the heating elements 11a can be elaborately arranged.

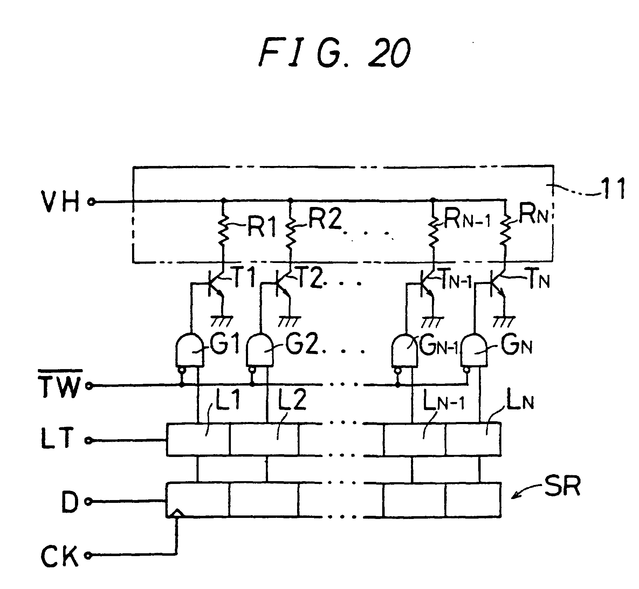

FIG. 20 is a circuit diagram showing another example of the drive circuit of the thermal head 11. The thermal head 11 has a plurality of heating elements R1 to RN arranged in a line. Since the circumferential velocity of the disk print medium M increases as the track radius increases, it is necessary that the heat generation amount is smaller for more inner tracks of the medium with respect to the heat generation amount at the heating element R1 which prints the outermost track. For example, when the heat generation amount at the innermost heating element RN is set to approximately 70% with the heat generation amount at the outermost heating element R1 being 100%, the heat generation amount at the n-th heating element Rn counted from the outermost heating element can be calculated by proportional distribution in accordance with the track radius. Therefore, since the heat generation amount is inversely proportional to the electrical resistance, the electrical resistance value of the heating element Rn of the thermal head 11 driven at a constant voltage is set as follows:

$$Rn = R1/[1-\{0.3 \times (n-1) / (N-1)\}]$$

Here, R1 is the electrical resistance value of the outermost heating element, and N is the total number of heating elements (for example, 301). The electrical resistance values of the heating elements can be adjusted by trimming in the manufacturing process of the thermal head. The expression shown above may be modified as appropriate in accordance with the print characteristic of the disk print medium M and the characteristic of the thermal head.

In the drive circuit of FIG. 20, one ends of the heating elements R1 to RN of the thermal head 11 are connected in common and supplied with the energization voltage VH, and the other ends are individually connected to the transistors T1 to TN. The image data D is supplied to the shift register SR in synchronism with the clock signal CK, and when transfer of data corresponding to one line is finished, the data is temporarily stored in the latches L1 to LN by the latch signal LT. Then, when the write signal TW becomes low, the gates G1 to GN control conduction of the transistors T1 to TN in accordance with the image data, so that the heating elements R1 to RN selectively generate heat.

At this time, since the electrical resistance values of the heating elements R1 to RN are set so that an inner heating element has a higher resistance value than that of an outer heating element, the amount of heat applied to an inner portion of the disk print medium M is smaller than that applied to an outer portion thereof. Consequently, the density variations due to the circumferential velocity variations among tracks can be corrected.

[Effect of the Invention]

As detailed above, according to the invention, by overlapping the printing start area and the printing end area, the position shift, the density variations and the like of the image at the printing start position and at the printing end position are spatially leveled, the seam of the print image becomes inconspicuous to the naked eye, so that images of much higher quality than ever can be obtained.

Moreover, by controlling the energizing time per pixel of the print head so as to be longer for an outer pixel than for an inner pixel, the applied energy per unit length in the circumferential direction of the disk print medium becomes the same at all the tracks, so that the density variations due to the circumferential velocity variations among tracks can be eliminated. Consequently, high-quality images can be obtained.

Moreover, by controlling the drive voltage of the print head so as to be higher for an outer pixel than for an inner pixel, the applied energy per unit length in the circumferential direction of the disk print medium becomes the same at all the tracks, so that the density variations due to the circumferential velocity variations among tracks can be eliminated. Consequently, high-quality images can be obtained.

Moreover, since an inner heating element has a smaller sub scanning direction dimension than that of an outer heating element, overlaps and gaps between pixels are avoided, so that high-quality images can be realized.

Moreover, since an inner heating element has a higher electric resistance value than that of an outer heating element, the inner heating element generates a smaller amount of heat than that of the outer heating element, so that the density variations due to the circumferential velocity variations among tracks of the disk print medium can be corrected. Consequently, high-quality images can be realized.

**Claims**

1. An endless medium printing apparatus comprising:

    printing means for printing in a main scanning direction along a transverse direction of an endless medium; and medium conveying means for conveying the endless medium in a sub scanning direction along a longitudinal direction thereof,
    the apparatus forming an image composed of a plurality of pixels arranged in the transverse and longitudinal directions based on image data supplied from an external host,
    wherein a printing start area extending a predetermined length from a printing start position of the printing means and a printing end area extending backward a predetermined length from a printing end position of the printing means overlap with each other to make an overlap-printing area.

2. The endless medium printing apparatus of claim 1, wherein sub scanning lines in the printing start area and sub scanning lines in the printing end area are disposed so as to alternate every predetermined number of lines in the overlap-printing area.

3. The endless medium printing apparatus of claim 1, wherein the pixels in the printing start area and the pixels in the printing end area are two-dimensionally disposed so as to alternate every predetermined number of pixels in the overlap-printing area.

4. The endless medium printing apparatus of claim 1, wherein printing is carried out with a weight being assigned to each pixel density so that from the printing start position toward the printing end position in the overlap-printing area, pixel density monotonously increases in the printing start area and monotonously decreases in the printing end area.

5. The endless medium printing apparatus of claim 1, the apparatus comprising:
   a buffer memory for continuously developing image data of the printing start area, image data of the non-overlap-printing area and image data of the printing end area.

6. An endless medium printing method comprising the steps of:

   printing on an endless medium in a main scanning direction along a transverse direction of the endless medium, based on image data supplied from an external host while conveying the endless medium in a sub scanning direction along a longitudinal direction thereof, to form an image composed of a plurality of pixels arranged in the transverse and longitudinal directions,
   wherein a printing start area extending a predetermined length from a printing start position and a printing end area extending backward a predetermined length from a printing end position are printed so as to overlap with each other.

7. A rotary printing apparatus comprising:

   a print head for printing in a main scanning direction along a radial direction of a disk print medium; and
   medium rotating means for rotating the disk print medium in a sub scanning direction along a circumferential direction thereof,
   the apparatus forming an image composed of a plurality of pixels arranged in the radial and circumferential directions based on image data supplied from an external host, and comprising:
   energizing time controlling means for controlling a energizing time per pixel of the print head so as to be longer for an outer pixel than for an inner pixel.

8. The rotary printing apparatus of claim 7, wherein the energizing time per pixel is controlled by increasing and decreasing number of repetitions of a pulse signal having a predetermined duty ratio.

9. The rotary printing apparatus of claim 7, wherein the energizing time per pixel is substantially proportional to the radius from a center of the medium to the pixel.

10. A rotary printing method comprising the steps of:

    printing on a disk print medium in a main scanning direction along a radial direction of the disk print medium, based on image data supplied from an external host while conveying the disk print medium in a sub scanning direction along a circumferential direction thereof to form an image composed of a plurality of pixels arranged in the radial and circumferential directions,
    wherein a energizing time per pixel of a print head is controlled so as to be longer for an outer pixel than for an inner pixel.

11. A rotary printing method comprising the steps of:

    printing on a disk print medium in a main scanning direction along a radial direction of the disk print medium, based on image data supplied from an external host while conveying the disk print medium in a sub scanning direction along a circumferential direction thereof to form an image composed of a plurality of pixels arranged in the radial and circumferential directions,

wherein a drive voltage of a print head is controlled so as to be higher for an outer pixel than for an inner pixel.

12. A rotary printing thermal head for printing in a main scanning direction along a radial direction of a disk print medium, comprising:

a plurality of heating elements arranged in a line;
wherein an inner heating element has a smaller dimension in the sub scanning direction than that of an outer heating element.

13. A rotary printing thermal head for printing in a main scanning direction along a radial direction of a disk print medium, comprising:

a plurality of heating elements arranged in a line;
wherein an inner heating element has a higher electric resistance value than that of an outer heating elements.

14. A rotary printing apparatus comprising:

the rotary printing thermal head of claim 12 or 13; and
medium rotating means for rotating the disk print medium in a sub scanning direction along a circumferential direction of the disk print medium,
wherein an image composed of a plurality of pixels arranged in the radial and circumferential directions is formed based on image data supplied from an external host.

# F I G. 1

# F I G. 2A

# F I G. 2B

# FIG. 3

# FIG. 4

TIME (sec)

FIG. 5A

FIG. 5B

FIG. 5C

FIG. 5D

FIG. 5E

FIG. 5F

# FIG. 6

OVERLAP-PRINTING AREA RD

PE

PS

M

# FIG. 7A

| | |
|---|---|
| P(1,1) **IMAGE DATA**<br>P(2,1) "<br>P(3,1) "<br>:<br>:<br>P(C,1) " | 1st LINE |
| P(1,2) **IMAGE DATA**<br>P(2,2) "<br>P(3,2) "<br>:<br>P(C,2) " | 2nd LINE |
| :<br>:<br>:<br>P(x,y) "<br>:<br>: | y-th LINE |
| P(1,R) **IMAGE DATA**<br>P(2,R) "<br>P(3,R) "<br>:<br>P(C,R) " | R-th LINE |

# FIG. 7B

| | |
|---|---|
| P(1,1) **IMAGE DATA**<br>P(2,1) "<br>P(3,1) "<br>:<br>P(C,1) " | |
| P(1,2) **IMAGE DATA**<br>P(2,2) "<br>P(3,2) "<br>:<br>P(C,2) " | OVERLAP-<br>PRINTING<br>AREA Ra<br>-FIRST<br>ROUND- |
| P(1,3) **IMAGE DATA**<br>P(2,3) "<br>P(3,3) "<br>:<br>P(C,3) " | |
| P(1,4) **IMAGE DATA**<br>P(2,4) "<br>P(3,4) "<br>:<br>P(C,4) " | |
| :<br>:<br>:<br>P(x,y) "<br>:<br>: | |
| P(1,R) **IMAGE DATA**<br>P(2,R) "<br>P(3,R) "<br>:<br>P(C,R) " | |
| P(1,1) **IMAGE DATA**<br>P(2,1) "<br>P(3,1) "<br>:<br>P(C,1) " | |
| P(1,2) **IMAGE DATA**<br>P(2,2) "<br>P(3,2) "<br>:<br>P(C,2) " | OVERLAP-<br>PRINTING<br>AREA Rb<br>-SECOND<br>ROUND- |
| P(1,3) **IMAGE DATA**<br>P(2,3) "<br>P(3,3) "<br>:<br>P(C,3) " | |

# F I G. 8

COMB-TOOTH TYPE OVERLAPPING PROCESS

RD

PRINTING END POSITION PE PS PRINTING START POSITION

MAIN SCANNING DIRECTION

OVERLAP-PRINTING AREA
SUB SCANNING DIRECTION

※ ■:PRINT IMAGE PIXELS OF FIRST ROUND
□:PRINT IMAGE PIXELS OF SECOND ROUND

21

# FIG. 9A

COMB-TOOTH TYPE
OVERLAP DATA DEVELOPMENT

y = 0
(SUB SCANNING COUNTER) a1

x = 0
(MAIN SCANNING COUNTER) a2

COMB-TOOTH
TYPE PROCESS a3

MAIN SCANNING LOOP
a4

x < > C

$x = x + 1$
?

x = C

SUB SCANNING LOOP
a5

y < 2

$y = y + 1$
?

y = 3

END

# FIG. 9B

COMB-TOOTH
TYPE PROCESS

b1

Buffer Address Calculation
SrcAdrs = BufTopAdrs + y * C + x
DstAdrs = BufTopAdrs + (R + y) * C + x

b2

PixelData = [SrcAdrs]

b3

[SrcAdrs] = PixelData * (x mod 2)

b4

[DstAdrs] = PixelData * ((x + 1) mod 2)

END

# F I G. 10

CHECKER TYPE OVERLAPPING PROCESS

RD

PRINTING END POSITION PE PS PRINTING START POSITION

MAIN SCANNING DIRECTION

OVERLAP-PRINTING AREA

SUB SCANNING DIRECTION

※ ■:PRINT IMAGE PIXELS OF FIRST ROUND
□:PRINT IMAGE PIXELS OF SECOND ROUND

## FIG. 11A

```
( CHECKER PATTERN
  DATA DEVELOPMENT )
         │
         ▼
┌─────────────────────────┐
│        y = 0            │ c1
│ (SUB SCANNING COUNTER)  │
└─────────────────────────┘
         │
         ▼
┌─────────────────────────┐
│        x = 0            │ c2
│ (MAIN SCANNING COUNTER) │
└─────────────────────────┘
         │
         ▼          c3
║┌─────────────────────┐║
║│  CHECKER PATTERN    │║
║│  PROCESSING         │║
║└─────────────────────┘║
         │
         ▼
MAIN            c4
SCANNING   ◇ x = x + 1 ◇
LOOP       ◇     ?     ◇
x < > C
                x = C
                │
                ▼       c5
SUB SCANNING ◇ y = y + 1 ◇
LOOP         ◇     ?     ◇
y < 2
                y = 3
                │
                ▼
            ( END )
```

## FIG. 11B

```
( CHECKER PATTERN
  PROCESSING )
         │
         ▼                                    d1
┌──────────────────────────────────────────┐
│ Buffer Address Calculation               │
│  SrcAdrs = BufTopAdrs + y * C + x        │
│  DstAdrs = BufTopAdrs + (R + y) * C + x  │
└──────────────────────────────────────────┘
         │
         ▼                                    d2
┌──────────────────────────────────────────┐
│      PixelData = [SrcAdrs]               │
└──────────────────────────────────────────┘
         │
         ▼                                    d3
┌──────────────────────────────────────────┐
│ [SrcAdrs] =                              │
│   PixelData * ((x mod 2) XOR (y mod 2))  │
└──────────────────────────────────────────┘
         │
         ▼                                    d4
┌──────────────────────────────────────────┐
│ [DistAdrs] =                             │
│   PixelData * !((x mod 2) XOR (y mod 2)) │
└──────────────────────────────────────────┘
         │
         ▼
      ( END )
```

24

# F I G. 12A

Rb

Ra

IMAGE DENSITY WEIGHT CURVE

PRINTING END
POSITION PE

PRINTING START
POSITION PS

ENLARGEMENT

ENLARGEMENT

# F I G. 12B

OVERLAP-PRINTING AREA RD

PRINTING END POSITION
DENSITY WEIGHT

PRINTING START POSITION
DENSITY WEIGHT

# FIG. 13A

IMAGE DATA WEIGHTING DEVELOPMENT

↓

y = 0
(SUB SCANNING COUNTER)  e1

↓

x = 0
(MAIN SCANNING COUNTER)  e2

↓

WEIGHTING PROCESS  e3

↓

MAIN SCANNING LOOP

x < > C

x = x + 1  e4

x = C

↓

SUB SCANNING LOOP

y < 2

y = y + 1  e5

y = 3

↓

END

# FIG. 13B

WEIGHTING PROCESS

↓

Buffer Address Calculation
SrcAdrs = BufTopAdrs + y * C + x
DstAdrs = BufTopAdrs + (R + y) * C + x  f1

↓

PixelData = [SrcAdrs]  f2

↓

[SrcAdrs] =
PixelData * (y + 1) / (3 + 1)  f3

↓

[DistAdrs] =
PixelData * (3 + 1 - (Y + 1)) / (3 + 1)  f4

↓

END

# FIG. 14

# FIG. 15

# F I G. 16

# FIG. 17

# F I G. 18

# F I G. 19

# FIG. 20

# INTERNATIONAL SEARCH REPORT

| | International application No. |
|---|---|
| | PCT/JP99/04567 |

**A. CLASSIFICATION OF SUBJECT MATTER**
Int. Cl$^6$ B41J3/407, 2/32, 2/36, 2/345

According to International Patent Classification (IPC) or to both national classification and IPC

**B. FIELDS SEARCHED**

Minimum documentation searched (classification system followed by classification symbols)
Int. Cl$^6$ B41J2/01, 2/32, 2/345, 2/36, 3/407, B41M5/26, B41F17/14, 17/20, G11B7/24

Documentation searched other than minimum documentation to the extent that such documents are included in the fields searched
Jitsuyo Shinan Koho          1922-1996      Toroku Jitsuyo Shinan Koho  1994-1999
Kokai Jitsuyo Shinan Koho   1971-1999      Jitsuyo Shinan Toroku Koho  1996-1999

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| P,X<br>A | JP, 11-34305, A (Canon Inc.),<br>09 February, 1999 (09.02.99),<br>Full text; Figs. 1 to 5<br>Full text; Figs. 1 to 5   (Family: none) | 1,6<br>2-5,7-14 |
| A | JP, 7-220281, A (Hitachi, Ltd.),<br>18 August, 1995 (18.08.95),<br>Full text; Figs. 1 to 5   (Family: none) | 1-14 |
| A | JP, 6-338079, A (Alps Electric Co., Ltd.),<br>06 December, 1994 (06.12.94),<br>Full text; Figs. 1 to 7   (Family: none) | 1-14 |
| A | JP, 5-238005, A (Taiyo Yuden Co., Ltd.),<br>17 September, 1993 (17.09.93),<br>Full text; Figs. 1 to 5   (Family: none) | 1-14 |

☐ Further documents are listed in the continuation of Box C.     ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>05 November, 1999 (05.11.99) | Date of mailing of the international search report<br>24 November, 1999 (24.11.99) |
|---|---|
| Name and mailing address of the ISA/<br>Japanese Patent Office | Authorized officer |
| Facsimile No. | Telephone No. |

Form PCT/ISA/210 (second sheet) (July 1992)